# EUROPEAN PATENT APPLICATION

(11) **EP 4 620 960 A1**
(43) Date of publication of application: **24.09.2025**
(21) Application number: 23891365.1
(22) Date of filing: 02.11.2023
(51) Int. Cl.: C07F 7/18, C07F 7/20

(54) **COMPOSITION CONTAINING AMINOALKYL ALKOXY DISILOXANE COMPOUND AND AMINOALKYL ALKOXY OLIGOSILOXANE COMPOUND, AND METHOD FOR PRODUCING SAME**

(30) Priority: 17.11.2022 JP 2022184245
(71) Applicant: SHIN-ETSU CHEMICAL CO., LTD., Tokyo 1000005 (JP)
(72) Inventor: KAWAKAMI Masato, Joetsu-shi, Niigata 942-8601 (JP); AOKI Shotaro, Joetsu-shi, Niigata 942-8601 (JP)
(74) Representative: Mewburn Ellis LLP
(86) International application number: PCT/JP2023/039538
(87) International publication number: WO 2024/106212

(57) **Abstract**

Provided is a composition comprising:
an aminoalkyl alkoxy disiloxane compound represented by general formula (1) 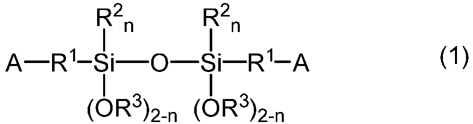 [where R¹ represents a divalent hydrocarbon group, R² and R³ represent a monovalent hydrocarbon group, each A independently represents a group represented by general formula (2) 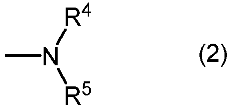 (where R⁴ and R⁵ each independently represent a hydrogen atom or a monovalent hydrocarbon group and may bond with each other to form a ring structure, excluding cases where R⁴ and R⁵ are both a hydrogen atom), and each n is independently 0 or 1]; and
an aminoalkyl alkoxy oligosiloxane compound represented by general formula (3) 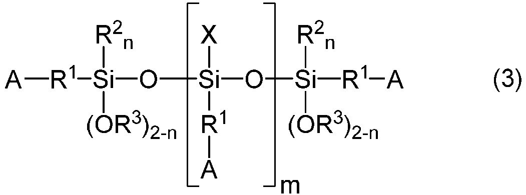 (where R¹ to R³, A, and n are the same as above, m represents an integer of 1-6, and X represents R² or OR³). The composition exhibits good properties.

## Description

### TECHNICAL FIELD

The present invention relates to a composition containing an aminoalkylalkoxydisiloxane compound and an aminoalkylalkoxyoligosiloxane compound, and to a method for preparing the same.

### BACKGROUND ART

Aminoalkylalkoxysilane compounds are useful as, for example, silane coupling agents, surface treatment agents, resin additives, resin modifiers and paint additives.

Known aminoalkylalkoxysilane compounds include primary amino group-containing organoxysilane compounds such as aminopropyltrimethoxysilane, secondary amino group-containing organoxysilane compounds such as N-phenylaminopropyltrimethoxysilane and tertiary amino group-containing organoxysilane compounds such as dimethylaminopropyltrimethoxysilane.

Aminoalkylalkoxysilane compounds (also referred to below as "monomer compounds") can be converted by hydrolytic condensation to the corresponding aminoalkylalkoxydisiloxane compounds (also referred to below as "disiloxane compounds"), aminoalkylalkoxytrisiloxane compounds (also referred to below as "trisiloxane compounds") and compounds in which hydrolytic condensation has proceeded even further (hydrolytic condensation products from trisiloxanes up to octasiloxanes are collectedly referred to below as "oligosiloxane compounds"). Because of the high molecular weight of these hydrolytic condensation products compared with monomer compounds, they have a low volatility and are easy to handle. Also, their volatile organic compound (VOC) emissions per unit weight are lower than those of monomer compounds, and so adverse effects on the environment and human health are limited. In addition, because these hydrolytic condensates are larger molecules, the numbers of reaction sites and of functional groups within the molecule increase, which sometimes confers good properties when used in the above applications.

For example, in Patent Document 1, disiloxane compounds are synthesized by the hydrolytic condensation of aminoalkylalkoxysilane compounds and subsequent purification by distillation.

### PRIOR ART DOCUMENTS

### PATENT DOCUMENT

Patent Document 1: JP-A 2002-193976

### SUMMARY OF INVENTION

### TECHNICAL PROBLEM

In Patent Document 1, the alkoxysilyl group in the monomer compound is a trialkylmonoalkoxysilyl group and so, when a hydrolytic condensation reaction is carried out, in principle, only a disiloxane compound without any alkoxysilyl groups can be obtained. Hence, no mention has been made of trisiloxane compounds and higher condensates. Nor has anything been disclosed on the usefulness of including such compounds.

The present invention was arrived at in light of the above circumstances. The objects of the invention are to provide an aminoalkylalkoxydisiloxane compound and aminoalkylalkoxyoligosiloxane compound-containing composition which exhibits good properties, and to provide a method for preparing such a composition.

### SOLUTION TO PROBLEM

The inventors have conducted intensive investigations aimed at achieving the above objects. As a result, they have found that, in the course of preparing and isolating an aminoalkylalkoxydisiloxane compound, even though the boiling point difference is sufficiently large, a composition containing also, albeit in a small amount, an aminoalkyloligosiloxane compound can be obtained. They have also found that a composition containing an aminoalkylalkoxydisiloxane compound and an aminoalkyloligosiloxane compound exhibits better properties than aminoalkylalkoxysilane compounds and aminoalkylalkoxydisiloxane compounds in common uses for this type of compound, such as surface treatment. These discoveries ultimately led to the present invention.

Accordingly, the invention provides:
1. A composition which includes:
   an aminoalkylalkoxydisiloxane compound of general formula (1) below 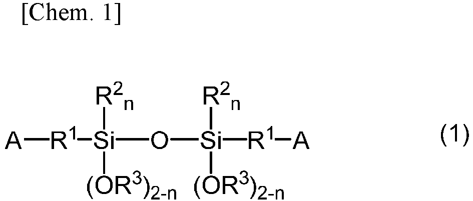 [wherein each R¹ is independently an unsubstituted divalent hydrocarbon group of 1 to 8 carbon atoms, R² and R³ are each independently an unsubstituted monovalent hydrocarbon group of 1 to 6 carbon atoms, each A is independently a group of general formula (2) below 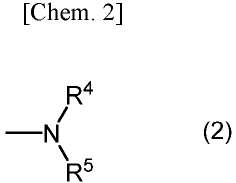 (wherein R⁴ and R⁵ are each independently a hydrogen atom or an unsubstituted monovalent hydrocarbon group of 1 to 10 carbon atoms which may include an oxygen atom or a nitrogen atom, and may bond together to form a ring structure, except when R⁴ and R⁵ are both hydrogen atoms), and each n is independently 0 or 1], and
   an aminoalkylalkoxyoligosiloxane compound of general formula (3) below 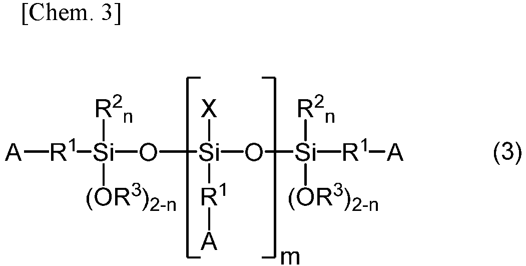 (wherein R¹ to R³, A and n are the same as above, m is an integer from 1 to 6, and X is R² or OR³);
2. The composition of 1 above, wherein the aminoalkylalkoxyoligosiloxane compound is included in an amount (area ratio) which is from 0.05 to 20% of the combined amount of the aminoalkylalkoxydisiloxane compound and the aminoalkylalkoxyoligosiloxane compound; and
3. A method for preparing the composition of 1 or 2 above, which method includes the step of hydrolytically condensing an aminoalkylalkoxysilane compound of general formula (4) below
   [Chem. 4]

   A-R¹-SiR²ₙ(OR³)₃₋ₙ (4)

   (wherein R¹ to R³, A and n are the same as above) to obtain a mixture containing an aminoalkylalkoxydisiloxane compound of above general formula (1), an aminoalkylalkoxyoligosiloxane compound of general formula (3) above, an aminoalkylalkoxysilane compound of general formula (4) above and an alcohol compound of general formula (5) below
   [Chem. 5]

   R³OH (5)

   (wherein R₃ is the same as above), and then subjecting the mixture to distillation.

### ADVANTAGEOUS EFFECTS OF INVENTION

Because the composition of the invention includes, in addition to an aminoalkylalkoxydisiloxane compound having a lower volatility and lower VOC emissions per unit weight and an increased number of reaction sites and functional groups within the molecule than the monomer compound, a small amount of an aminoalkyloligosiloxane compound, it exhibits better properties than the monomer compound or the disiloxane compound when used in various applications.

### DESCRIPTION OF EMBODIMENTS

The invention is described more fully below.

The composition of the invention includes an aminoalkylalkoxydisiloxane compound of general formula (1) below (also referred to below as "Compound (1)") and an aminoalkylalkoxyoligosiloxane compound of general formula (3) below (also referred to below as "Compound (3)").

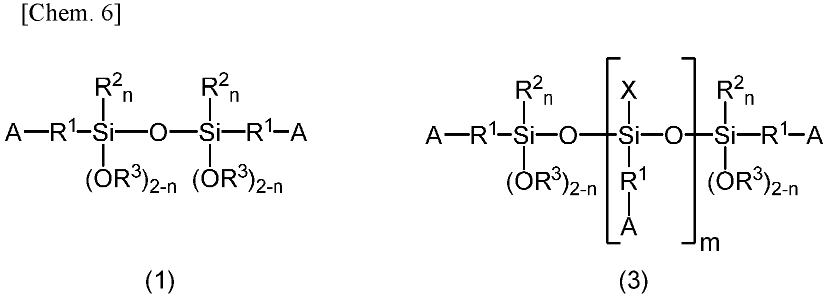

In above general formulas (1) and (3), each R¹ is independently an unsubstituted divalent hydrocarbon group of 1 to 8 carbon atoms, preferably 1 to 5 carbon atoms, and more preferably 1 to 3 carbon atoms.

The divalent hydrocarbon group of R¹ may be linear, branched or cyclic. Specific examples include linear alkylene groups such as methylene, ethylene, trimethylene, tetramethylene, pentamethylene, hexamethylene and octamethylene groups; branched alkylene groups such as methylethylene (propylene) and methyltrimethylene groups; cyclic alkylene groups such as cyclohexylene and methylenecyclohexylenemethylene groups; linear alkenylene groups such as propenylene, butenylene, hexenylene and octenylene groups; branched alkenylene groups such as isopropenylene and isobutenylene groups; arylene groups such as the phenylene group; and aralkylene groups such as methylenephenylene and methylenephenylenemethylene groups.

Of these, from the standpoint of the availability of the starting materials, linear alkylene groups are preferred; linear alkylene groups of 1 to 3 carbon atoms are more preferred.

In general formulas (1) and (3), R² and R³ are each independently an unsubstituted monovalent hydrocarbon group of 1 to 6 carbon atoms, preferably 1 to 3 carbon atoms.

The monovalent hydrocarbon groups of R² and R³ may be linear, branched or cyclic. Specific examples include linear alkyl groups such as methyl, ethyl, n-propyl, n-butyl, n-pentyl and n-hexyl groups; branched alkyl groups such as isopropyl, isobutyl, sec-butyl, tert-butyl, neopentyl and thexyl groups; cyclic alkyl groups such as cyclopentyl and cyclohexyl groups; alkenyl groups such as vinyl, allyl, propenyl, butenyl and pentenyl groups; and aryl groups such as the phenyl group.

Of these, from the standpoint of the availability of the starting materials, a linear alkyl group is preferred; a linear alkyl group of 1 to 3 carbon atoms is more preferred.

In formulas (1) and (3), each A is independently a group of general formula (2) below.

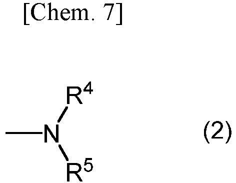

In general formula (2), R⁴ and R⁵ are each independently a hydrogen atom, an unsubstituted monovalent hydrocarbon group of 1 to 10 carbon atoms, preferably 1 to 5 carbon atoms, more preferably 1 to 3 carbon atoms, which may include an oxygen atom or a nitrogen atom. R⁴ and R⁵ are not both hydrogen atoms.

The monovalent hydrocarbon groups of R⁴ and R⁵ may be linear, branched or cyclic. Specific examples include linear alkyl groups such as methyl, ethyl, n-propyl, n-butyl, n-pentyl, n-hexyl, n-heptyl, n-octyl and decyl groups; branched alkyl groups such as isopropyl, isobutyl, sec-butyl, tert-butyl, neopentyl, thexyl and 2-ethylhexyl groups; cyclic alkyl groups such as cyclopentyl and cyclohexyl groups; alkenyl groups such as vinyl, allyl (2-propenyl), 1-propenyl, butenyl, pentenyl and octenyl groups; aryl groups such as phenyl and tolyl groups; and aralkyl groups such as benzyl and phenethyl groups.

R⁴ and R⁵ may mutually bond to form, together with a nitrogen atom, a cyclic structure of general formula (7) below.

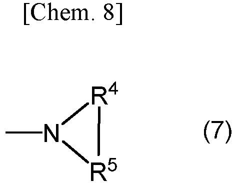

In general formula (7), the number of carbon atoms included in the ring when R⁴ and R⁵ form a ring is preferably from 3 to 6. That is, R⁴ and R⁵ preferably join to form a linear alkylene group of 3 to 6 carbon atoms. Also, -O- or -NR- (wherein R is a hydrogen atom or an alkyl group of 1 to 6 carbon atoms) may be included in this alkylene chain. The linear alkylene group of 3 to 6 carbon atoms and the alkyl group of 1 to 6 carbon atoms are exemplified by the same groups as mentioned above for R¹ and R².

Examples of such ring structures include piperidine, pyrrolidine, piperazine, methylpiperazine and morpholine rings.

In general formula (3), X is R² or OR³. R² and R³ here are exemplified by the same groups as R² and R³ above.

Also, m is an integer from 1 to 6, preferably an integer from 1 to 4, more preferably 1 or 2, and even more preferably 1. When m is greater than 6, the viscosity rises and handling becomes difficult.

In general formulas (1) and (3), each n is independently 0 or 1.

Specific examples of Compound (1) include
1,3-bis(aminoalkyl)-1,1,3,3-tetraalkoxydisiloxane compounds such as
1,3-bis(diethylaminopropyl)-1,1,3,3-tetramethoxydisiloxane,
1,3-bis(dimethylaminopropyl)-1,1,3,3-tetramethoxydisiloxane,
1,3-bis(dibutylaminopropyl)-1,1,3,3-tetramethoxydisiloxane,
1,3-bis(butylaminopropyl)-1,1,3,3-tetramethoxydisiloxane,
1,3-bis(octylaminopropyl)-1,1,3,3-tetramethoxydisiloxane,
1,3-bis(phenylaminopropyl)-1,1,3,3-tetramethoxydisiloxane,
1,3-bis(morpholinopropyl)-1,1,3,3-tetramethoxydisiloxane,
1,3-bis(piperazinopropyl)-1,1,3,3-tetramethoxydisiloxane,
1,3-bis(methylpiperazinopropyl)-1,1,3,3-tetramethoxydisiloxane,
1,3-bis(diethylaminopropyl)-1,1,3,3-tetraethoxydisiloxane,
1,3-bis(dimethylaminopropyl)-1,1,3,3-tetraethoxydisiloxane,
1,3-bis(dibutylaminopropyl)-1,1,3,3-tetraethoxydisiloxane,
1,3-bis(butylaminopropyl)-1,1,3,3-tetraethoxydisiloxane,
1,3-bis(octylaminopropyl)-1,1,3,3-tetraethoxydisiloxane,
1,3-bis(phenylaminopropyl)-1,1,3,3-tetraethoxydisiloxane,
1,3-bis(morpholinopropyl)-1,1,3,3-tetraethoxydisiloxane,
1,3-bis(piperazinopropyl)-1,1,3,3-tetraethoxydisiloxane,
1,3-bis(methylpiperazinopropyl)-1,1,3,3-tetraethoxydisiloxane,
1.3-bis(diethylaminomethyl)-1,1,3,3-tetramethoxydisiloxane,
1,3-bis(dimethylaminomethyl)-1,1,3,3-tetramethoxydisiloxane,
1,3-bis(dibutylaminomethyl)-1,1,3,3-tetramethoxydisiloxane,
1,3-bis(butylaminomethyl)-1,1,3,3-tetramethoxydisiloxane,
1,3-bis(octylaminomethyl)-1,1,3,3-tetramethoxydisiloxane,
1,3-bis(phenylaminomethyl)-1,1,3,3-tetramethoxydisiloxane,
1,3-bis(morpholinomethyl)-1,1,3,3-tetramethoxydisiloxane,
1,3-bis(piperazinomethyl)-1,1,3,3-tetramethoxydisiloxane,
1,3-bis(methylpiperazinomethyl)-1,1,3,3-tetramethoxydisiloxane,
1,3-bis(diethylaminomethyl)-1,1,3,3-tetraethoxydisiloxane,
1,3-bis(dimethylaminomethyl)-1,1,3,3-tetraethoxydisiloxane,
1,3-bis(dibutylaminomethyl)-1,1,3,3-tetraethoxydisiloxane,
1,3-bis(butylaminomethyl)-1,1,3,3-tetraethoxydisiloxane,
1,3-bis(octylaminomethyl)-1,1,3,3-tetraethoxydisiloxane,
1,3-bis(phenylaminomethyl)-1,1,3,3-tetraethoxydisiloxane,
1,3-bis(morpholinomethyl)-1,1,3,3-tetraethoxydisiloxane,
1,3-bis(piperazinomethyl)-1,1,3,3-tetraethoxydisiloxane,
1,3-bis(methylpiperazinomethyl)-1,1,3,3-tetraethoxydisiloxane,
1,3-bis(diethylaminooctyl)-1,1,3,3-tetramethoxydisiloxane,
1,3-bis(dimethylaminooctyl)-1,1,3,3-tetramethoxydisiloxane,
1,3-bis(dibutylaminooctyl)-1,1,3,3-tetramethoxydisiloxane,
1,3-bis(butylaminooctyl)-1,1,3,3-tetramethoxydisiloxane,
1,3-bis(octylaminooctyl)-1,1,3,3-tetramethoxydisiloxane,
1,3-bis(phenylaminooctyl)-1,1,3,3-tetramethoxydisiloxane,
1,3-bis(morpholinooctyl)-1,1,3,3-tetramethoxydisiloxane,
1,3-bis(piperazinooctyl)-1,1,3,3-tetramethoxydisiloxane,
1,3-bis(methylpiperazinooctyl)-1,1,3,3-tetramethoxydisiloxane,
1,3-bis(diethylaminooctyl)-1,1,3,3-tetraethoxydisiloxane,
1,3-bis(dimethylaminooctyl)-1,1,3,3-tetraethoxydisiloxane,
1,3-bis(dibutylaminooctyl)-1,1,3,3-tetraethoxydisiloxane,
1,3-bis(butylaminooctyl)-1,1,3,3-tetraethoxydisiloxane,
1,3-bis(octylaminooctyl)-1,1,3,3-tetraethoxydisiloxane,
1,3-bis(phenylaminooctyl)-1,1,3,3-tetraethoxydisiloxane,
1,3-bis(morpholinooctyl)-1,1,3,3-tetraethoxydisiloxane,
1,3-bis(piperazinooctyl)-1,1,3,3-tetraethoxydisiloxane and
1,3-bis(methylpiperazinooctyl)-1,1,3,3-tetraethoxydisiloxane; and
1,3-bis(aminoalkyl)-1,3-dialkoxy-1,3-dialkyldisiloxanes such as
1,3-bis(diethylaminopropyl)-1,3-dimethoxy-1,3-dimethyldisiloxane,
1,3-bis(dimethylaminopropyl)-1,3-dimethoxy-1,3-dimethyldisiloxane,
1,3-bis(dibutylaminopropyl)-1,3-dimethoxy-1,3-dimethyldisiloxane,
1,3-bis(butylaminopropyl)-1,3-dimethoxy-1,3-dimethyldisiloxane,
1,3-bis(octylaminopropyl)-1,3-dimethoxy-1,3-dimethyldisiloxane,
1,3-bis(phenylaminopropyl)-1,3-dimethoxy-1,3-dimethyldisiloxane,
1,3-bis(morpholinopropyl)-1,3-dimethoxy-1,3-dimethyldisiloxane,
1,3-bis(piperazinopropyl)-1,3-dimethoxy-1,3-dimethyldisiloxane and
1,3-bis(methylpiperazinopropyl)-1,3-dimethoxy-1,3-dimethyldisiloxane.

Specific examples of Compound (3) include trisiloxane compounds such as
1,3,5-tris(diethylaminopropyl)-1,1,3,5,5-pentamethoxytrisiloxane,
1,3,5-tris(dimethylaminopropyl)-1,1,3,5,5-pentamethoxytrisiloxane,
1,3,5-tris(dibutylaminopropyl)-1,1,3,5,5-pentamethoxytrisiloxane,
1,3,5-tris(butylaminopropyl)-1,1,3,5,5-pentamethoxytrisiloxane,
1,3,5-tris(phenylaminopropyl)-1,1,3,5,5-pentamethoxytrisiloxane,
1,3,5-tris(morpholinopropyl)-1,1,3,5,5-pentamethoxytrisiloxane,
1,3,5-tris(piperazinopropyl)-1,1,3,5,5-pentamethoxytrisiloxane,
1,3,5-tris(methylpiperazinopropyl)-1,1,3,5,5-pentamethoxytrisiloxane,
1,3,5-tris(diethylaminopropyl)-1,5-dimethoxy-1,3,5-trimethyltrisiloxane,
1,3,5-tris(dimethylaminopropyl)-1,5-dimethoxy-1,3,5-trimethyltrisiloxane,
1,3,5-tris(dibutylaminopropyl)-1,5-dimethoxy-1,3,5-trimethyltrisiloxane,
1,3,5-tris(butylaminopropyl)-1,5-dimethoxy-1,3,5-trimethyltrisiloxane,
1,3,5-tris(phenylaminopropyl)-1,5-dimethoxy-1,3,5-trimethyltrisiloxane,
1,3,5-tris(morpholinopropyl)-1,5-dimethoxy-1,3,5-trimethyltrisiloxane,
1,3,5-tris(piperazinopropyl)-1,5-dimethoxy-1,3,5-trimethyltrisiloxane,
1,3,5-tris(methylpiperazinopropyl)-1,5-dimethoxy-1,3,5-trimethyltrisiloxane,
1,3,5-tris(diethylaminopropyl)-1,1,3,5,5-pentaethoxytrisiloxane,
1,3,5-tris(dimethylaminopropyl)-1,1,3,5,5-pentaethoxytrisiloxane,
1,3,5-tris(dibutylaminopropyl)-1,1,3,5,5-pentaethoxytrisiloxane,
1,3,5-tris(butylaminopropyl)-1,1,3,5,5-pentaethoxytrisiloxane,
1,3,5-tris(phenylaminopropyl)-1,1,3,5,5-pentaethoxytrisiloxane,
1,3,5-tris(morpholinopropyl)-1,1,3,5,5-pentaethoxytrisiloxane,
1,3,5-tris(piperazinopropyl)-1,1,3,5,5-pentaethoxytrisiloxane,
1,3,5-tris(methylpiperazinopropyl)-1,1,3,5,5-pentaethoxytrisiloxane,
1,3,5-tris(diethylaminopropyl)-1,5-diethoxy-1,3,5-trimethyltrisiloxane,
1,3,5-tris(dimethylaminopropyl)-1,5-diethoxy-1,3,5-trimethyltrisiloxane,
1,3,5-tris(dibutylaminopropyl)-1,5-diethoxy-1,3,5-trimethyltrisiloxane,
1,3,5-tris(butylaminopropyl)-1,5-diethoxy-1,3,5-trimethyltrisiloxane,
1,3,5-tris(phenylaminopropyl)-1,5-diethoxy-1,3,5-trimethyltrisiloxane,
1,3,5-tris(morpholinopropyl)-1,5-diethoxy-1,3,5-trimethyltrisiloxane,
1,3,5-tris(piperazinopropyl)-1,5-diethoxy-1,3,5-trimethyltrisiloxane and
1,3,5-tris(methylpiperazinopropyl)-1,5-diethoxy-1,3,5-trimethyltrisiloxane; tetrasiloxane compounds such as
1,3,5,7-tetrakis(diethylaminopropyl)-1,1,3,5,7,7-hexamethoxytetrasiloxane,
1,3,5,7-tetrakis(dimethylaminopropyl)-1,1,3,5,7,7-hexamethoxytetrasiloxane,
1,3,5,7-tetrakis(dibutylaminopropyl)-1,1,3,5,7,7-hexamethoxytetrasiloxane,
1,3,5,7-tetrakis(butylaminopropyl)-1,1,3,5,7,7-hexamethoxytetrasiloxane,
1,3,5,7-tetrakis(phenylaminopropyl)-1,1,3,5,7,7-hexamethoxytetrasiloxane,
1,3,5,7-tetrakis(morpholinopropyl)-1,1,3,5,7,7-hexamethoxytetrasiloxane,
1,3,5,7-tetrakis(piperazinopropyl)-1,1,3,5,7,7-hexamethoxytetrasiloxane,
1,3,5,7-tetrakis(methylpiperazinopropyl)-1,1,3,5,7,7-hexamethoxytetrasiloxane,
1,3,5,7-tetrakis(diethylaminopropyl)-1,7-dimethoxy-1,3,5,7-tetramethyltetrasiloxane,
1,3,5,7-tetrakis(dimethylaminopropyl)-1,7-dimethoxy-1,3,5,7-tetramethyltetrasiloxane,
1,3,5,7-tetrakis(dibutylaminopropyl)-1,7-dimethoxy-1,3,5,7-tetramethyltetrasiloxane,
1,3,5,7-tetrakis(butylaminopropyl)-1,7-dimethoxy-1,3,5,7-tetramethyltetrasiloxane,
1,3,5,7-tetrakis(phenylaminopropyl)-1,7-dimethoxy-1,3,5,7-tetramethyltetrasiloxane,
1,3,5,7-tetrakis(morpholinopropyl)-1,7-dimethoxy-1,3,5,7-tetramethyltetrasiloxane,
1,3,5,7-tetrakis(piperazinopropyl)-1,7-dimethoxy-1,3,5,7-tetramethyltetrasiloxane,
1,3,5,7-tetrakis(methylpiperazinopropyl)-1,7-dimethoxy-1,3,5,7-tetramethyltetrasiloxane,
1,3,5,7-tetrakis(diethylaminopropyl)-1,1,3,5,7,7-hexaethoxytetrasiloxane,
1,3,5,7-tetrakis(dimethylaminopropyl)-1,1,3,5,7,7-hexaethoxytetrasiloxane,
1,3,5,7-tetrakis(dibutylaminopropyl)-1,1,3,5,7,7-hexaethoxytetrasiloxane,
1,3,5,7-tetrakis(butylaminopropyl)-1,1,3,5,7,7-hexaethoxytetrasiloxane,
1,3,5, 7-tetrakis(phenylaminopropyl)-1, 1,3,5,7, 7-hexaethoxytetrasiloxane,
1,3,5,7-tetrakis(morpholinopropyl)-1,1,3,5,7,7-hexaethoxytetrasiloxane,
1,3,5,7-tetrakis(piperazinopropyl)-1,1,3,5,7,7-hexaethoxytetrasiloxane,
1,3,5,7-tetrakis(methylpiperazinopropyl)-1,1,3,5,7,7-hexaethoxytetrasiloxane,
1,3,5,7-tetrakis(diethylaminopropyl)-1,7-diethoxy-1,3,5,7-tetramethyltetrasiloxane,
1,3,5,7-tetrakis(dimethylaminopropyl)-1,7-diethoxy-1,3,5,7-tetramethyltetrasiloxane,
1,3,5,7-tetrakis(dibutylaminopropyl)-1,7-diethoxy-1,3,5,7-tetramethyltetrasiloxane,
1,3,5,7-tetrakis(butylaminopropyl)-1,7-diethoxy-1,3,5,7-tetramethyltetrasiloxane,
1,3,5,7-tetrakis(phenylaminopropyl)-1,7-diethoxy-1,3,5,7-tetramethyltetrasiloxane,
1,3,5,7-tetrakis(morpholinopropyl)-1,7-diethoxy-1,3,5,7-tetramethyltetrasiloxane,
1,3,5,7-tetrakis(piperazinopropyl)-1,7-diethoxy-1,3,5,7-tetramethyltetrasiloxane and
1,3,5,7-tetrakis(methylpiperazinopropyl)-1,7-diethoxy-1,3,5,7-tetramethyltetrasiloxane; pentasiloxane compounds such as
1,3,5,7,9-pentakis(diethylaminopropyl)-1,1,3,5,7,9,9-heptamethoxypentasiloxane,
1,3,5,7,9-pentakis(dimethylaminopropyl)-1,1,3,5,7,9,9-heptamethoxypentasiloxane,
1,3,5,7,9-pentakis(dibutylaminopropyl)-1,1,3,5,7,9,9-heptamethoxypentasiloxane,
1,3,5,7,9-pentakis(butylaminopropyl)-1,1,3,5,7,9,9-heptamethoxypentasiloxane,
1,3,5,7,9-pentakis(phenylaminopropyl)-1,1,3,5,7,9,9-heptamethoxypentasiloxane,
1,3,5,7,9-pentakis(morpholinopropyl)-1,1,3,5,7,9,9-heptamethoxypentasiloxane,
1,3,5,7,9-pentakis(piperazinopropyl)-1,1,3,5,7,9,9-heptamethoxypentasiloxane,
1,3,5,7,9-pentakis(methylpiperazinopropyl)-1,1,3,5,7,9,9-heptamethoxypentasiloxane,
1,3,5,7,9-pentakis(diethylaminopropyl)-1,9-dimethoxy-1,3,5,7,9-pentamethylpentasiloxane,
1,3,5,7,9-pentakis(dimethylaminopropyl)-1,9-dimethoxy-1,3,5,7,9-pentamethylpentasiloxane,
1,3,5,7,9-pentakis(dibutylaminopropyl)-1,9-dimethoxy-1,3,5,7,9-pentamethylpentasiloxane,
1,3,5,7,9-pentakis(butylaminopropyl)-1,9-dimethoxy-1,3,5,7,9-pentamethylpentasiloxane,
1,3,5,7,9-pentakis(phenylaminopropyl)-1,9-dimethoxy-1,3,5,7,9-pentamethylpentasiloxane,
1,3,5,7,9-pentakis(morpholinopropyl)-1,9-dimethoxy-1,3,5,7,9-pentamethylpentasiloxane,
1,3,5,7,9-pentakis(piperazinopropyl)-1,9-dimethoxy-1,3,5,7,9-pentamethylpentasiloxane,
1,3,5,7,9-pentakis(methylpiperazinopropyl)-1,9-dimethoxy-1,3,5,7,9-pentamethylpentasiloxane,
1,3,5,7,9-pentakis(diethylaminopropyl)-1,1,3,5,7,9,9-heptaethoxypentasiloxane,
1,3,5,7,9-pentakis(dimethylaminopropyl)-1,1,3,5,7,9,9-heptaethoxypentasiloxane,
1,3,5,7,9-pentakis(dibutylaminopropyl)-1,1,3,5,7,9,9-heptaethoxypentasiloxane,
1,3,5,7,9-pentakis(butylaminopropyl)-1,1,3,5,7,9,9-heptaethoxypentasiloxane,
1,3,5,7,9-pentakis(phenylaminopropyl)-1,1,3,5,7,9,9-heptaethoxypentasiloxane,
1,3,5,7,9-pentakis(morpholinopropyl)-1,1,3,5,7,9,9-heptaethoxypentasiloxane,
1,3,5,7,9-pentakis(piperazinopropyl)-1,1,3,5,7,9,9-heptaethoxypentasiloxane,
1,3,5,7,9-pentakis(methylpiperazinopropyl)-1,1,3,5,7,9,9-heptaethoxypentasiloxane,
1,3,5,7,9-pentakis(diethylaminopropyl)-1,9-diethoxy-1,3,5,7,9-pentamethylpentasiloxane,
1,3,5,7,9-pentakis(dimethylaminopropyl)-1,9-diethoxy-1,3,5,7,9-pentamethylpentasiloxane,
1,3,5,7,9-pentakis(dibutylaminopropyl)-1,9-diethoxy-1,3,5,7,9-pentamethylpentasiloxane,
1,3,5,7,9-pentakis(butylaminopropyl)-1,9-diethoxy-1,3,5,7,9-pentamethylpentasiloxane,
1,3,5,7,9-pentakis(phenylaminopropyl)-1,9-diethoxy-1,3,5,7,9-pentamethylpentasiloxane,
1,3,5,7,9-pentakis(morpholinopropyl)-1,9-diethoxy-1,3,5,7,9-pentamethylpentasiloxane,
1,3,5,7,9-pentakis(piperazinopropyl)-1,9-diethoxy-1,3,5,7,9-pentamethylpentasiloxane and
1,3,5,7,9-pentakis(methylpiperazinopropyl)-1,9-diethoxy-1,3,5,7,9-pentamethylpentasiloxane; hexasiloxane compounds such as
1,3,5,7,9,11-hexakis(diethylaminopropyl)-1,1,3,5,7,9,11,11-octamethoxyhexasiloxane,
1,3,5,7,9,11-hexakis(phenylaminopropyl)-1,1,3,5,7,9,11,11-octamethoxyhexasiloxane,
1,3,5,7,9,11-hexakis(morpholinopropyl)-1,1,3,5,7,9,11,11-octamethoxyhexasiloxane,
1,3,5,7,9,11-hexakis(diethylaminopropyl)-1,11-dimethoxy-1,3,5,7,9,11-hexamethylhexasiloxane,
1,3,5,7,9,11-hexakis(phenylaminopropyl)-1,11-dimethoxy-1,3,5,7,9,11-hexamethylhexasiloxane,
1,3,5,7,9,11-hexakis(morpholinopropyl)-1,11-dimethoxy-1,3,5,7,9,11-hexamethylhexasiloxane,
1,3,5,7,9,11-hexakis(diethylaminopropyl)-1,1,3,5,7,9,11,11-octaethoxyhexasiloxane,
1,3,5,7,9,11-hexakis(phenylaminopropyl)-1,1,3,5,7,9,11,11-octaethoxyhexasiloxane,
1,3,5,7,9,11-hexakis(morpholinopropyl)-1,1,3,5,7,9,11,11-octaethoxyhexasiloxane,
1,3,5,7,9,11-hexakis(diethylaminopropyl)-1,11-diethoxy-1,3,5,7,9,11-hexamethylhexasiloxane,
1,3,5,7,9,11-hexakis(phenylaminopropyl)-1,11-diethoxy-1,3,5,7,9,11-hexamethylhexasiloxane and
1,3,5,7,9,11-hexakis(morpholinopropyl)-1,11-diethoxy-1,3,5,7,9,11-hexamethylhexasiloxane; heptasiloxane compounds such as
1,3,5,7,9,11,13-heptakis(diethylaminopropyl)-1,1,3,5,7,9,11,13,13-nonamethoxyheptasiloxane,
1,3,5,7,9,11,13-heptakis(phenylaminopropyl)-1,1,3,5,7,9,11,13,13-nonamethoxyheptasiloxane,
1,3,5,7,9,11,13-heptakis(morpholinopropyl)-1,1,3,5,7,9,11,13,13-nonamethoxyheptasiloxane,
1,3,5,7,9,11,13-heptakis(diethylaminopropyl)-1,13-dimethoxy-1,3,5,7,9,11,13-heptamethylheptasiloxane,
1,3,5,7,9,11,13-heptakis(phenylaminopropyl)-1,13-dimethoxy-1,3,5,7,9,11,13-heptamethylheptasiloxane,
1,3,5,7,9,11,13-heptakis(morpholinopropyl)-1,13-dimethoxy-1,3,5,7,9,11,13-heptamethylheptasiloxane,
1,3,5,7,9,11,13-heptakis(diethylaminopropyl)-1,1,3,5,7,9,11,13,13-nonaethoxyheptasiloxane,
1,3,5,7,9,11,13-heptakis(phenylaminopropyl)-1,1,3,5,7,9,11,13,13-nonaethoxyheptasiloxane,
1,3,5,7,9,11,13-heptakis(morpholinopropyl)-1,1,3,5,7,9,11,13,13-nonaethoxyheptasiloxane,
1,3,5,7,9,11,13-heptakis(diethylaminopropyl)-1,13-diethoxy-1,3,5,7,9,11,13-heptamethylheptasiloxane,
1,3,5,7,9,11,13-heptakis(phenylaminopropyl)-1,13-diethoxy-1,3,5,7,9,11,13-heptamethylheptasiloxane and
1,3,5,7,9,11,13-heptakis(morpholinopropyl)-1,13-diethoxy-1,3,5,7,9,11,13-heptamethylheptasiloxane; and octasiloxane compounds such as
1,3,5,7,9,11,13,15-octakis(diethylaminopropyl)-1,1,3,5,7,9,11,13,15,15-decamethoxyoctasiloxane,
1,3,5,7,9,11,13, 15-octakis(phenylaminopropyl)-1, 1,3,5,7,9, 11, 13, 15, 15-decamethoxyoctasiloxane,
1,3,5,7,9,11,13,15-octakis(morpholinopropyl)-1,1,3,5,7,9,11,13,15,15-decamethoxyoctasiloxane,
1,3,5,7,9,11,13,15-octakis(diethylaminopropyl)-1,15-dimethoxy-1,3,5,7,9,11,13,15-octamethyloctasiloxane,
1,3,5,7,9,11,13,15-octakis(phenylaminopropyl)-1,15-dimethoxy-1,3,5,7,9,11,13,15-octamethyloctasiloxane,
1,3,5,7,9,11,13,15-octakis(morpholinopropyl)-1,15-dimethoxy-1,3,5,7,9,11,13,15-octamethyloctasiloxane,
1,3,5,7,9,11,13,15-octakis(diethylaminopropyl)-1,1,3,5,7,9,11,13,15,15-decaethoxyoctasiloxane,
1,3,5,7,9,11,13, 15-octakis(phenylaminopropyl)-1, 1,3,5,7,9, 11, 13, 15, 15-decaethoxyoctasiloxane,
1,3,5,7,9,11,13, 15-octakis(morpholinopropyl)-1, 1,3,5,7,9,11,13,15, 15-decaethoxyoctasiloxane,
1,3,5,7,9,11,13,15-octakis(diethylaminopropyl)-1,15-diethoxy-1,3,5,7,9,11,13,15-octamethyloctasiloxane,
1,3,5,7,9,11,13,15-octakis(phenylaminopropyl)-1,15-diethoxy-1,3,5,7,9,11,13,15-octamethyloctasiloxane and
1,3,5,7,9,11,13,15-octakis(morpholinopropyl)-1,15-diethoxy-1,3,5,7,9,11,13,15-octamethyloctasiloxane.

These oligosiloxane compounds may be a single compound or a mixture of two or more compounds, provided that R¹ to R³ and A are the same; that is, provided that only the value of m differs.

In the composition of the invention, the content (area ratio) of Compound (3), although not particularly limited, is preferably from 0.05 to 20%, more preferably from 0.1 to 15%, and even more preferably from 0.5 to 10%, of the combined amount of Compound (1) and Compound (3). At a content of less than 0.05%, satisfactory properties may not be exhibited when the composition is used in various applications. At more than 20%, discoloration may end up arising due to high-temperature treatment for isolating a given amount of Compound (3), which discoloration may be a problem when the composition is used in various applications.

Hence, the inventive composition, being a composition which contains an aminoalkylalkoxydisiloxane compound as the main ingredient, does not require that a higher than necessary temperature be applied at the time of isolation. Accordingly, discoloration due to amino groups is suppressed in the resulting composition and there is no apparent formation of monomer compounds or decrease in purity due to disproportionation reactions.

The area ratio mentioned above is the peak area ratio obtained from gas chromatographic analysis (also referred to below as "GC analysis") or gel permeation chromatographic analysis (also referred to below as "GPC analysis").

Next, a method for preparing the composition of the invention is described.

The inventive composition can be obtained by a method of preparation that includes the step of hydrolytically condensing an aminoalkylalkoxysilane compound of general formula (4) below (also referred to below as "Compound (4)") to obtain a mixture of Compounds (1), (3) and (4) and an alcohol compound of general formula (5) below, and then subjecting the mixture to distillation. 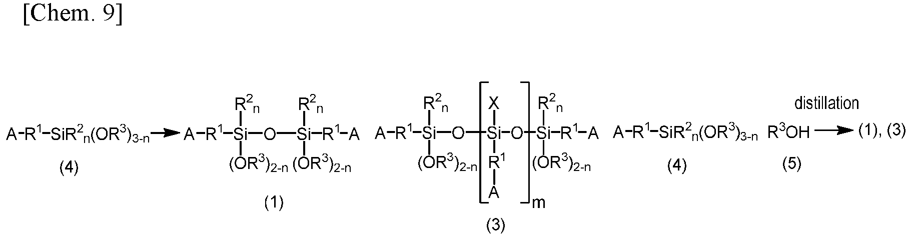 In the formulas, R¹ to R³, A, X , m and n are the same as above.

Specific examples of Compound (4) include trialkoxysilane compounds such as dimethylaminopropyltrimethoxysilane, diethylaminopropyltrimethoxysilane, dibutylaminopropyltrimethoxysilane, butylaminopropyltrimethoxysilane, octylaminopropyltrimethoxysilane, phenylaminopropyltrimethoxysilane, morpholinopropyltrimethoxysilane, piperazinopropyltrimethoxysilane, methylpiperazinopropyltrimethoxysilane, diethylaminopropyltriethoxysilane, dimethylaminopropyltriethoxysilane, dibutylaminopropyltriethoxysilane, butylaminopropyltriethoxysilane, octylaminopropyltriethoxysilane, phenylaminopropyltriethoxysilane, morpholinopropyltriethoxysilane, piperazinopropyltriethoxysilane and methylpiperazinopropyltriethoxysilane; and alkyldialkoxysilane compounds such as diethylaminopropylmethyldimethoxysilane, dimethylaminopropylmethyldimethoxysilane, dibutylaminopropylmethyldimethoxysilane, butylaminopropylmethyldimethoxysilane, octylaminopropylmethyldimethoxysilane, phenylaminopropylmethyldimethoxysilane, morpholinopropylmethyldimethoxysilane, piperazinopropylmethyldimethoxysilane, methylpiperazinopropyltrimethoxysilane, diethylaminopropylmethyldiethoxysilane, dimethylaminopropylmethyldiethoxysilane, dibutylaminopropylmethyldiethoxysilane, butylaminopropylmethyldiethoxysilane, octylaminopropylmethyldiethoxysilane, phenylaminopropylmethyldiethoxysilane, morpholinopropylmethyldiethoxysilane, piperazinopropylmethyldiethoxysilane and methylpiperazinopropylmethyldiethoxysilane.

The conditions of the hydrolytic condensation reaction on Compound (4) are not particularly limited, although the hydrolytic condensation reaction may be carried out with, optionally, the addition of water to Compound (4) in the presence of a solvent or a catalyst, and with, if necessary, heating and stirring.

The amount of water used in the hydrolytic condensation reaction is not particularly limited. However, from the standpoint of suppressing the formation of trisiloxane and higher condensates, the amount is preferably from 0.05 to 0.5 mole, and more preferably from 0.1 to 0.4 mole, per mole of Compound (4).

In cases where water is added, to keep localized reactions from proceeding, the water may be added as a mixture with a solvent. The solvent that is used may be a protic polar solvent such as methanol or ethanol, or an aprotic polar solvent such as acetonitrile, tetrahydrofuran or dimethylformamide. The method of mixing the solvent may involve, for example, first mixing together Compound (4) and the solvent, and subsequently adding the water or a mixture of the water and the solvent.

The hydrolytic condensation reaction on Compound (4) proceeds even in the absence of a catalyst, although the reaction time can be shortened by using a catalyst. Catalysts that may be used include, without particular limitation, acidic compounds such as hydrogen chloride, hydrogen bromide, hydrogen iodide, nitric acid, sulfuric acid, acetic acid and methanesulfonic acid; basic compounds such as ammonia, sodium hydroxide, potassium hydroxide, sodium methoxide and sodium ethoxide; salts composed of a weak acid and a strong base, such as sodium acetate; salts composed of a strong acid and a weak base, such as ammonium sulfate; and metal compounds such as tin compounds, titanium compounds and aluminum compounds. These catalysts may be used singly or two or more may be used in admixture.

The reaction temperature in the hydrolytic condensation reaction is not particularly limited, but is preferably between 0°C and 100°C, and more preferably between 20°C and 70°C.

The reaction time in the hydrolytic condensation reaction is not particularly limited, but is preferably from 0.5 to 8 hours, and more preferably from 0.5 to 4 hours.

Following the hydrolytic condensation reaction, the resulting reaction mixture is distilled.

The distillation apparatus is not particularly limited. However, to ensure a Compound (3) content that enables the desired properties to be obtained when the composition is used in various applications, a distillation apparatus having a theoretical plate number of from 1 to 20, preferably from 1 to 10, and more preferably from 1 to 5, may be used. As used herein, "theoretical plate number" is an indicator of the performance of an apparatus which carries out separation by utilizing the difference in partition ratios of a substance between two phases--a stationary phase and a mobile phase.

Also, to ensure a Compound (3) content that enables the desired properties to be obtained when the composition is used in various applications, the reflux ratio in distillation is preferably from 0.0 to 2.0, more preferably from 0.0 to 1.5, and even more preferably from 0.0 to 1.0.

### EXAMPLES

Examples and Comparative Examples are given below by way of illustration, although the invention is not limited by these Examples.

**In** the Examples and Comparative Examples, the level of purity is based on the results of GC analysis or GPC analysis.

The apparatuses and conditions for GC analysis and GPC analysis are as follows.

### [GC Analysis]

| | |
|---|---|
| Gas Chromatograph: | GC-2014 (from Shimadzu Corporation) |
| Packed Column: | Silicone SE-30 (GL Sciences Inc.) |
| Detector: | TCD |
| Detector Temperature: | 300°C |
| Injection Port Temperature: | 300°C |
| Temperature Program: | 70°C (0 min) → 10°C/min → 300°C (10 min) |
| Carrier Gas: | Helium (50 mL/min) |
| Amount of Sample Injected: | 1 µL |

### [GPC Analysis]

| | |
|---|---|
| Apparatus: | HLC-8420GPC EcoSEC Elite-WS (Tosoh Corporation) |
| Columns: | Shodex GPC KF-G 4A (Showa Denko KK) |
| | Shodex GPC KF-404 HQ (Showa Denko KK) |
| | Shodex GPC KF-402.5 HQ (Showa Denko KK) |
| Detector: | RI |
| Eluant: | Tetrahydrofuran (THF) |
| Flow Rate: | 0.35 mL/min |
| Column Thermostatic Chamber Temperature: | 40°C |
| Reference Material: | Polystyrene |

### [Example 1-1] Preparation of 1,3-Bis(diethylaminopropyl)-1,1,3,3-tetramethoxydisiloxane-Containing Composition

A flask equipped with a stirrer, a reflux condenser, a dropping funnel and a thermometer was charged with 706.2 g (3.000 mol) of diethylaminopropyltrimethoxysilane. To this was added dropwise 16.2 g (0.900 mol) of water and stirring was carried out at 70°C for 3 hours.

The resulting reaction mixture was distilled using a distillation apparatus having a theoretical plate count of 4 and at a reflux ratio of 0.0, yielding 129.4 g of the 148°C/0.3 kPa fraction as a clear colorless liquid. GC analysis of this fraction resulted in area ratios of 99% for disiloxane compounds and 1% for trisiloxane compounds.

### [Example 1-2] Preparation of 1,3-Bis(morpholinopropyl)-1,3-dimethoxy-1,3-dimethyldisiloxane-Containing Composition

A flask equipped with a stirrer, a reflux condenser, a dropping funnel and a thermometer was charged with 233 g (1.00 mol) of morpholinopropylmethyldimethoxysilane and 1.0 g (0.0052 mol) of a 28 wt% methanol solution of sodium methoxide. To this was added dropwise 14.4 g (0.800 mol) of water and stirring was carried out at 70°C for 3 hours.

The resulting reaction mixture was distilled using a distillation apparatus having a theoretical plate count of 1 and at a reflux ratio of 0.0, yielding 43.6 g of the 260°C/0.3 kPa fraction as a clear colorless liquid. GPC analysis of this fraction resulted in area ratios of 82% for disiloxane compounds, 11% for trisiloxane compounds and 7% for tetrasiloxane compounds.

### [Example 1-3] Preparation of 1,3-Bis(diethylaminopropyl)-1,1,3,3-tetramethoxydisiloxane-Containing Composition

A flask equipped with a stirrer, a reflux condenser, a dropping funnel and a thermometer was charged with 706.2 g (3.000 mol) of diethylaminopropyltrimethoxysilane. To this was added dropwise a mixture of 150 g of methanol and 16.2 g (0.900 mol) of water, and stirring was carried out at room temperature for 4 hours.

The resulting reaction mixture was distilled using a distillation apparatus having a theoretical plate count of 4 and at a reflux ratio of 0.0, yielding 243.5 g of the 168°C/0.4 kPa fraction as a clear colorless liquid. GC analysis of this fraction resulted in area ratios of 99% for disiloxane compounds and 1% for trisiloxane compounds.

The compounds used in the following Examples and Comparative Examples are shown below.

### (1) Silica

ZEOSIL 1165MP (from Solvay Japan, Ltd.)

### (2) Aminoalkylalkoxydisiloxane Compositions

| | |
|---|---|
| Composition 1: | Composition obtained in Example 1-1 |
| Composition 2: | Composition obtained in Example 1-2 |
| Comparative Compound 1: | diethylaminopropyltrimethoxysilane |
| Comparative Compound 2: | morpholinopropylmethyldimethoxysilane |
| Comparative Compound 3: | 1,3-bis(diethylaminopropyl)-1,1,3,3-tetramethoxydisiloxane |
| Comparative Compound 4: | 1,3-bis(morpholinopropyl)-1,3-dimethoxy-1,3-dimethyldisiloxane |

### [Examples 2-1 and 2-2, Comparative Examples 2-1 to 2-4]

In the respective Examples, a uniform solution was prepared by adding, in such a way as to not allow moisture incorporation, Composition 1 and 2 and Comparative Compounds 1 to 4 to 10 mL of toluene so as to set the molar amount of silicon to 1 mmol, and stirring.

Silica was heated at 105°C for 1 hour in a nitrogen atmosphere. After being allowed to cool to room temperature, the silica was added to the earlier prepared solution and left at rest for 3 hours. The silica was then collected by filtration, following which it was immersed in 20 mL of toluene and ultrasonically cleaned for 30 minutes. The silica was again recovered by filtration, and then heated and dried in vacuo at 100°C and 0.1 kPa, giving surface-treated silica.

The resulting surface-treated silica was subjected to compositional analysis by x-ray photoelectron spectroscopy (referred to below as "XPS compositional analysis"), and the ratios of the constituent atoms (%) at the surface of the surface-treated silica were calculated. The results are shown in Table 1

**[Table 1]**

| | Treated sample | Color of solution | Constituent atoms (atom %) | | | |
|---|---|---|---|---|---|---|
| | | | O | N | C | Si |
| Example 2-1 | Composition 1 | clear, colorless | 52.0 | 1.7 | 14.0 | 32.3 |
| Example 2-2 | Composition 2 | clear, colorless | 50.9 | 1.8 | 15.7 | 31.6 |
| Comparative Example 2-1 | Comparative Compound 1 | clear, colorless | 57.0 | 0.9 | 7.7 | 34.4 |
| Comparative Example 2-2 | Comparative Compound 2 | clear, colorless | 56.5 | 1.0 | 7.8 | 34.7 |
| Comparative Example 2-3 | Comparative Compound 3 | clear, colorless | 56.9 | 0.9 | 8.3 | 33.9 |
| Comparative Example 2-4 | Comparative Compound 4 | clear, colorless | 56.1 | 1.0 | 9.5 | 33.5 |

As shown in Table 1, because Compositions 1 and 2 used in the Examples of the invention include disiloxane compounds and trisiloxane compounds obtained by the hydrolytic condensation of a monomer compound, the proportions of nitrogen atoms and carbon atoms on the silica surface are higher than for the compounds used in the Comparative Examples. This means that the silica surface has been treated with a large amount of disiloxane compounds and trisiloxane compounds. As a result, when the compositions are used in various applications, they exhibit satisfactory properties.

## Claims

1. A composition comprising:
an aminoalkylalkoxydisiloxane compound of general formula (1) below 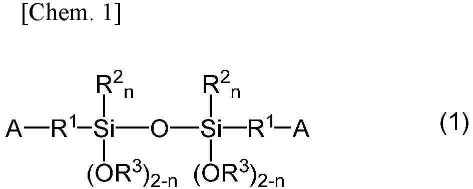 [wherein each R¹ is independently an unsubstituted divalent hydrocarbon group of 1 to 8 carbon atoms, R² and R³ are each independently an unsubstituted monovalent hydrocarbon group of 1 to 6 carbon atoms, each A is independently a group of general formula (2) below 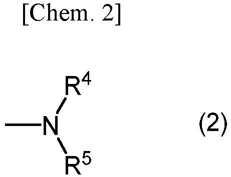 (wherein R⁴ and R⁵ are each independently a hydrogen atom or an unsubstituted monovalent hydrocarbon group of 1 to 10 carbon atoms which may include an oxygen atom or a nitrogen atom, and may bond together to form a ring structure, except when R⁴ and R⁵ are both hydrogen atoms), and each n is independently 0 or 1], and
an aminoalkylalkoxyoligosiloxane compound of general formula (3) below 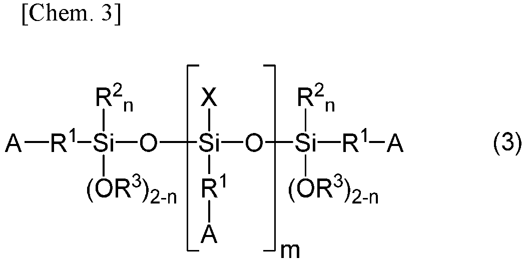 (wherein R¹ to R³, A and n are the same as above, m is an integer from 1 to 6, and X is R² or OR³).

2. The composition of claim 1, wherein the aminoalkylalkoxyoligosiloxane compound is included in an amount (area ratio) which is from 0.05 to 20% of the combined amount of the aminoalkylalkoxydisiloxane compound and the aminoalkylalkoxyoligosiloxane compound.

3. A method for preparing the composition of claim 1 or 2, which method comprises the step of hydrolytically condensing an aminoalkylalkoxysilane compound of general formula (4) below
[Chem. 4]
A-R¹-SiR²ₙ(OR³)₃₋ₙ (4)
(wherein R¹ to R³, A and n are the same as above) to obtain a mixture containing an aminoalkylalkoxydisiloxane compound of above general formula (1), an aminoalkylalkoxyoligosiloxane compound of general formula (3) above, an aminoalkylalkoxysilane compound of general formula (4) above and an alcohol compound of general formula (5) below
[Chem. 5]
R³OH (5)
(wherein R³ is the same as above), and then subjecting the mixture to distillation.
